# EUROPEAN PATENT APPLICATION

(11) **EP 1 054 140 A1**
(43) Date of publication of application: **22.11.2000**
(21) Application number: 99830301.0
(22) Date of filing: 14.05.1999
(51) Int. Cl.: F01N 7/18, F16L 51/02, F16L 27/111

(54) **A flexible vibration-decoupling connector, in particular for vehicle exhaust pipes**

(71) Applicant: FLEXIDER S.p.A., I-10156 Torino (IT)
(72) Inventor: Capra, Gianluigi, 10100 Torino (IT)
(74) Representative: Jorio, Paolo

(57) **Abstract**

A vibration-decoupling connector (1) of a type in which a corrugated sleeve (7) is connected, in a fluid-tight manner to two opposite end fittings (4, 5) sealably fixed, in turn, to respective portions of pipe to be connected; a second metal sleeve (10), forming a load-bearing portion of the connector, is arranged radially on the outside of the corrugated sleeve (7) to protect it; a flow-guide element (13) extends between the two end fittings (4, 5) to define a tubular portion of duct, fitted with radial clearance inside the corrugated sleeve (7); according to the invention, the flow-guide element (13) is securely connected to the corrugated sleeve, at an intermediate portion (25) thereof between the end fittings (4, 5) by plastic deformation exerted radially outwards: this plastic deformation can be carried out around an entire circumferential perimeter (27) of the portion (25), thus forming a continuous circumferential bulge which connects the flow-guide element (13) and the bellows sleeve (7), or may be restricted to a series of fixing points, circumferentially spaced around the circumferential perimeter of the portion (25).

## Description

The present invention relates to a flexible, vibration-decoupling connector for the fluid-tight connection of two portions of pipe, particularly suited for fitting into the exhaust pipe of a vehicle.

It is known that the connection between the exhaust manifold of the engine of a vehicle and the adjacent pipe, fixed to the vehicle body, generally requires an intermediate vibration decoupling element, in order to prevent the intense vibrations of the engine from being transmitted to the rest of the exhaust pipe, while of course providing gas-tight seal for the exhaust gas: this requirement is particularly important for modern exhaust pipes fitted with a catalytic converter and silencer.

An arrangement common in the prior art provides a vibration-decoupling connector, either between the exhaust manifold and the catalytic converter, or between the latter and the subsequent pipes (connected to the silencers), constituted by a flexible tubular bellows element of corrugated sheet steel, axially deformed so as to form a series of circular corrugations of constant diameter; this corrugated element is welded at its ends to two collars which are, in turn, welded directly to the manifold at one end, and to the catalytic converter (or, more generally, to the exhaust pipe) at the other; the flexible tube is usually covered by a protective outer sleeve made of steel wire.

Although this type of connector provides an effective seal against any leaking of exhaust gas, and performs relatively effectively its vibration-decoupling role between the engine and the adjacent exhaust pipe, it has the significant disadvantage of not effectively reducing the high-frequency vibrations which the passage of the exhaust gas induces, in use, in the corrugated element; the connector thus proves very noisy, due to the turbulence of the gases passing through it, and has one or more critical resonant frequencies, whereby resonance conditions could easily occur in use, with the risk of breakage whilst in operation.

In order to attenuate these vibrations, it is known to fit this type of connector with an internal flow-guide element or liner, arranged concentrically inside the flexible corrugated section: for example, it is known to use an element of rigid or metal mesh tube (similar to the outer protective sleeve) as the liner extending axially from one end of the flexible corrugated section towards the other; however, besides not proving entirely satisfactory in damping noise, these arrangements also have the disadvantage that, in use, the liner can interfere with the side walls of the flexible corrugated sections as a result of relative movement between the ends thereof (and made possible by the vibration-decoupling connector), it therefore being necessary to make the connector with ample clearance, thereby noticeably increasing its size.

European Patent Application 98830561.1, submitted on 25.11.98 by the Applicant, provides for an inner sheath to be used instead of a conventional liner, formed by an annular, tubular plug made of compressed wire mesh, constituted by a tubular metal sheath folded over in a plurality of radial layers and formed with interlaced linked loops of stainless steel wire. Although this arrangement is effective, it is relatively expensive, owing to the use of this metal mesh liner.

The object of the present invention is to provide a vibration-decoupling connector which will be free of the disadvantages described, and which, in particular, will effectively damp the vibrations caused by the passage of gas even at very high speeds, thereby significantly reducing noise, but which is at the same time simple and inexpensive to manufacture and smaller.

This object is achieved according to the invention, by providing a vibration-decoupling connector of the type comprising: first and second end fittings fixable, respectively, to first and second portions of pipe which are to be connected to each other; a first, elastically-deformable corrugated metal sleeve, operable in use to form a fluid-tight connection between the said portions of pipe, opposite ends of the said first sleeve being connected mechanically to the said end fittings, a second metal sleeve, forming a load-bearing part of the connector, being disposed radially outwardly of the first sleeve and connected in turn at opposite ends to the said end fittings; and a flow-guide element mechanically connected to the said first end fitting and shaped so as to define a portion of tubular duct extending axially with radial clearance, from the said first end fitting into the first sleeve and towards the second end fitting; the said connector being characterised in that the said flow-guide element is securely fixed to the said first sleeve at at least one intermediate point between the two said end fittings.

In a preferred embodiment, the flow-guide element is mechanically connected to the said first end by means of its own attachment portion, the said attachment portion having an enlarged part, with a diameter greater than the diameter of the said guide-element and being attached to an end portion of the said first length of tube; the said attachment portion ending with an end rim at a predetermined axial distance from a corresponding longitudinal end of the said first sleeve, which is securely fixed to the said first end fitting.

In this way, despite being extremely simple and economical to manufacture, the connector of the invention ensures an effective damping of the vibrations caused by the passage of gas, even at high speeds, by damping the resonant frequencies of the corrugated sleeve; in addition, the flow-guide element does not create any additional stress inside the connector and does not involve a risk of damage to the corrugated sleeve, since the possibility of interference with the latter, as a result for example of the permitted relative movement between the ends of the connector itself, is reduced by the fact that the flow-guide element is fixed within the corrugated sleeve.

In addition, in the preferred embodiment, in which the flow-guide element is anchored to the end by a radially outwardly expanded portion thereof, the connection of the flow-guide element to a section of pipe is extremely simple and inexpensive to carry out, thus reducing the number of components required in relation to prior art arrangements.

Further characteristics and advantages of the invention will become apparent from the following description of one embodiment, provided purely by way of non-limitative example, with reference to the appended drawings, in which:
Figure 1 is a partial longitudinal view, half in section, of a vibration-decoupling connector of the invention, showing a first longitudinal end portion and an intermediate portion; and
Figure 2 shows a second longitudinal end portion of the connector of Figure 1, on an enlarged scale compared to Figure 1 and with some details not to scale for greater clarity.

With reference to the appended drawings, a flexible vibration-decoupling connector is indicated 1, operable to connect, with a fluid-tight seal, and mechanical decoupling action, respective opposite sections of pipe 2, 3, belonging, for example, to the exhaust system of a vehicle fitted with a heat engine. For example, the connector 1 can be fitted in series along the aforesaid exhaust system to connect a section of pipe from the engine exhaust manifold to a length of pipe entering the catalytic converter, or to connect the catalytic converter to a subsequent silencer.

The connector 1 includes two opposite annular end fittings 4 and 5 which can be fixed in a fluid-tight manner in any known way (welding for example) to the lengths of pipe 2 and 3 to be connected, and a first, elastically deformable corrugated metal sleeve, connectable in a fluid-tight manner to the lengths of pipe 2, 3, securely connected, for this purpose, to the end fittings 4 and 5 at opposite longitudinal ends 8 and 9 which are formed as substantially cylindrical sleeves without corrugations; as illustrated, the ends 8, 9 are fitted tightly into the end fittings 4, 5 and are in use welded thereto, for example by the same weld beads that fix the end fittings 4, 5 to their respective lengths of pipe.

The connector 1 also includes a second sleeve 10, also made of metal, which constitutes a load-bearing part of the connector 1 and is arranged radially outwardly of the corrugated sleeve 7; in this case, the sleeve 10 is a partially flexible sleeve of a known type, formed of plaited metal braid, also connected mechanically to the end fittings 4, 5 along with the ends 8, 9 of the corrugated sleeve 7, pinched between these latter and the cylindrical side wall of the end fittings 4, 5; the sleeve 10 constitutes a support and mechanical strengthening element of the connector 1 and also protects the corrugated sleeve 7.

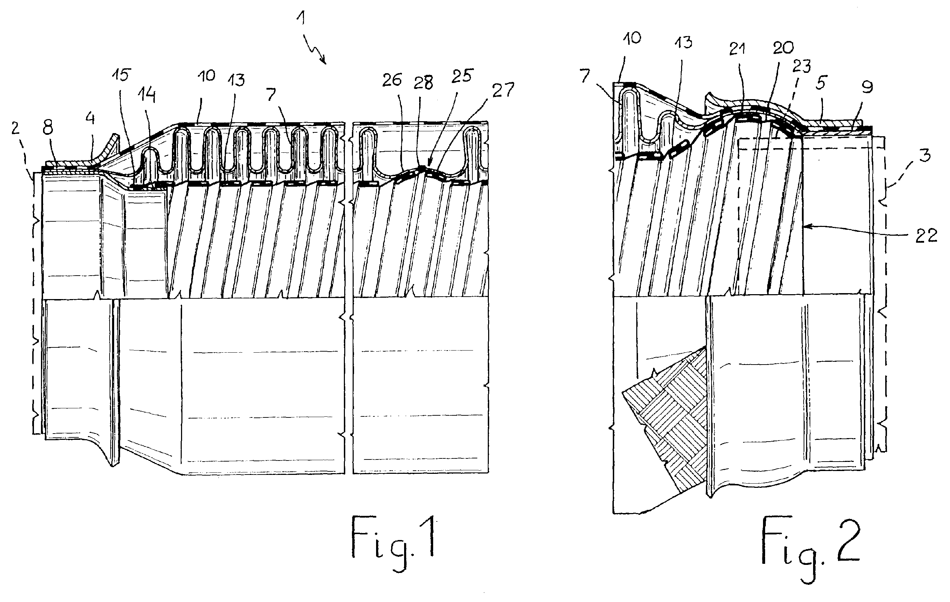

The connector also includes a flow-guide element 13, constituted in this case by a continuous metal sleeve made of metal tape wound and seamed into a helix: the flow-guide element 13 is mechanically connected to the terminal 4 and is shaped so as to define a length of tubular duct extending axially, from the end fitting 4, with radial clearance, inside the corrugated sleeve 7 towards the opposite end fitting 5; the mechanical coupling between the flow-guide element 13 and the end fitting 4 may be carried out in various ways: for example, as shown to the left of Figure 1, in a known arrangement shown by way of example, the flow-guide element 13 has a calibrated end 15 fitted (and possibly welded) onto the outside of a containment ring 14: the containment ring 14 is connected in turn to a frusto-conical portion of the length of pipe 2 connected to the end fitting 4.

In the preferred embodiment illustrated in the appended drawings, the flow-guide element 13 is also mechanically connected to the end fitting 5 (see in particular Figure 2), in this case by an attachment portion 20 having a diameter greater than the diameter of the said flow-guide element: the attachment portion 20 thus has at least one enlarged portion 21, expanded radially outwardly and mechanically connected by plastic deformation to the corrugated sleeve 7 inside the end fitting 5. In particular, the attachment portion 20 is radially enlarged with respect to the flow-guide element 13 and its portion 21 defines a continuous circumferential bulge, having a diameter greater than that of the flow-guide element 13 and ending in a circular rim 22 which also has a diameter greater than that of the flow-guide element 13 (the radial deformation of the attachment portion 20 of the flow-guide element 13 has been exaggerated in Figure 2 for the purpose of illustration, in addition, the rim 22 of the attachment portion 20 of the flow-guide element 13 is located at a predetermined axial distance, before the end 9 of the corrugated sleeve 7; the attachment portion 20 of the flow-guide element 13 is in turn radially fitted onto the outside of an end portion 23 of the length of pipe 3.

The end 9 of the corrugated sleeve 7 is press fitted inside the end fitting 5: the attachment portion 20 of the flow-guide 13 is also fitted tightly inside the corrugated sleeve 7, in a region thereof before its end 9: the end portion 23 of the length of pipe 3 is fitted into the end 9 of the corrugated sleeve 7 (and welded thereto) and extends inside the attachment portion of the flow-guide element 13. In use, the attachment portion 20 of the flow-guide element 13 is coupled, tightly (by its enlarged portion 21) in to the corrugated sleeve 7, in a region thereof just before its end 9, and fitted onto the outside of the end portion 23 of the length of pipe 3; at the site of the radially enlarged portion 21 of the flow-guide element 13, the corrugated sleeve 7 and the sleeve 10, as well as the end fitting 5, have respective circumferential bulges, also obtained, for example, by radially outward plastic deformation (the proportions have been exaggerated in Figure 2 for the sake of clarity).

The attachment portion 20 of the flow-guide element 13, in particular the enlarged portion 21 thereof, can also be attached to the end fitting 5 by spot or seam welding instead of by plastic deformation alone: in this case, the attachment portion 20 of the flow-guide element 13 would be calibrated onto the end portion 23 of the length of pipe 3.

It is clear that the flow-guide element 13 could be connected to only one of the end fittings 4, 5, in one of the ways described or in any other way; the flow-guide element 13 could also be connected to both the end fittings 4, 5 in the same way, using any of the embodiments described above, or another known method.

In any case, according to the present invention, the flow-guide element 13 is securely connected to the corrugated sleeve 7, by at least one intermediate portion 25 between the end fittings 4, 5: the portion 25 can be mechanically connected to the corrugated sleeve 7 at a plurality of fixing points spaced circumferentially around the perimeter, or continuously around the circumferential perimeter.

In the preferred (non-limitative) embodiment, illustrated in particular on the right side of Figure 1, the corrugated sleeve 7 has a portion 26 without corrugations at the site of the intermediate connection portion 25 of the flow-guide element 13: the flow-guide element 13 is securely fixed to the non-corrugated portion 26 of the corrugated sleeve 7 by a radially enlarged portion 27, which thus has a greater diameter than the rest of the flow-guide element 13: for example, the enlarged portion 27 of the flow-guide element 13 and the corresponding portion 26 of the corrugated sleeve 7 have been connected by plastic deformation exerted radially outwards from inside the flow-guide element 13 and the corrugated sleeve 7: this plastic deformation can be effected around an entire circumferential perimeter 28 of the portion 25, forming a continuous circumferential bulge for connecting the flow-guide element 13 and the corrugated sleeve 7, or can be limited to a series of coupling points spaced around the circumferential perimeter of the portion 25, three points, for example, spaced by 120°.

As an alternative to, or in addition to plastic deformation, the mechanical connection between the flow-guide element 13 and the corrugated sleeve 7 can also be ensured by welding, carried out either at the connection points formed by the plastic deformation or with a continuous welding bead around the entire circumferential perimeter 28 of the portion 25.

Clearly, the mechanical connection between the flow-guide element 13 and the corrugated sleeve 7 could be achieved by different methods than those described purely by way of example: in addition, the flow-guide element 13 could be mechanically connected to the corrugated sleeve 7 at a different number of points or intermediate portions between the terminals 4, 5, at a predetermined axial distance the one from the other.

Finally, it is clear that numerous further modifications and variations could be made to the connector as described and illustrated here, without departing thereby from the scope of the invention.

## Claims

1. A vibration-decoupling connector of a type which includes: first and second end fittings fixable, respectively, to first and a second portions of pipe to be connected: a first, elastically deformable corrugated metal sleeve, operable in use to connect the said portions of pipe so they are fluid-tight, the said first sleeve being mechanically connected at opposite ends to the said end fittings; a second metal sleeve, defining a load-bearing portion of the connector, arranged radially outwards of the first sleeve and mechanically connected, in turn, at opposite ends, to the said end fittings; and a flow-guide element, mechanically connected to the said first terminal and formed so as to define a portion of tubular duct, projecting axially, with radial clearance, from the said first end fitting, inside the first sleeve and towards the said second end fitting; the said connector being characterised in that the said flow-guide element is securely connected to the said first sleeve at at least one intermediate point between the two end fittings.

2. A connector according to Claim 1, characterised in that the said flow-guide element is securely connected to the said first sleeve at at least one intermediate portion between the two end fittings, the said at least one intermediate portion being mechanically connected to the said first sleeve at a plurality of fixing points spaced around a perimeter of the said at least one intermediate portion.

3. A connector according to Claim 1, characterised in that the said flow-guide element is securely connected to the said first sleeve at at least one intermediate portion between the said end fittings, the said at least one intermediate portion of the flow-guide element being mechanically connected to the said first sleeve around a continuous circumferential perimeter of the former.

4. A connector according to Claim 2 or 3, characterised in that the said first corrugated sleeve has a portion without corrugations at the site of the said at least one intermediate portion of the said flow-guide element.

5. A connector according to Claim 4, characterised in that the said flow-guide element is securely connected to the said corrugation-free portion of the said first sleeve by a radially enlarged portion; the said flow-guide element having been securely connected to the said corrugation-free portion of the said first sleeve by plastic deformation, exerted radially outwards from within said the flow-guide element and the said first sleeve.

6. A connector according to Claim 4 or 5, characterised in that the said flow-guide element is securely connected to the said corrugation-free portion of the said first sleeve by welding points and/or weld bead.

7. A connector according to any preceding claim, characterised in that the said flow-guide element has an attachment portion mechanically connecting it to the said first end fitting, the said attachment portion having at least one enlarged portion, with a diameter greater than the diameter of the flow-guide element and fitted onto an end portion of the said first portion of pipe; the said attachment portion ending in a rim at a predetermined axial distance from a corresponding longitudinal end of the said first sleeve, fixedly connected to the said first end fitting.

8. A connector according to the preceding Claim, characterised in that the said enlarged portion of the said attachment portion of the flow-guide element has been expanded radially outwardly from inside and mechanically connected to the said first sleeve inside the said first end fitting by plastic deformation; the said attachment portion of the flow-guide element being tightly fitted and radially clamped between the said end portion of the said first portion of pipe and the said first sleeve, at a region of the latter just before the said longitudinal end thereof.

9. A connector according to Claim 7 or Claim 8, characterised in that the said expanded portion of the said attachment portion of the flow-guide element is connected by welding to the said end portion of the said first portion of pipe.

10. A connector according to any preceding claim, characterised in that the said flow-guide element is also mechanically connected to the said second end fitting.

11. A connector according to any preceding claim, characterised in that the said flow-guide element is constituted by a third continuous sleeve made of seamed metal tape wound into a helix.
